(19) **Europäisches Patentamt / European Patent Office / Office européen des brevets**

(11) **EP 4 450 659 A1**

(12) # EUROPEAN PATENT APPLICATION
published in accordance with Art. 153(4) EPC

(43) Date of publication:
**23.10.2024 Bulletin 2024/43**

(21) Application number: **22927314.9**

(22) Date of filing: **01.12.2022**

(51) International Patent Classification (IPC):
**C22C 33/02** (2006.01)   **C22C 38/00** (2006.01)
**C22C 38/58** (2006.01)   **C22C 38/60** (2006.01)
**B33Y 80/00** (2015.01)   **B33Y 70/00** (2020.01)
**B22F 10/28** (2021.01)   **B22F 1/00** (2022.01)

(52) Cooperative Patent Classification (CPC):
**B22F 1/00; B22F 10/28; B33Y 70/00; B33Y 80/00;
C22C 33/02; C22C 38/00; C22C 38/58;
C22C 38/60;** Y02P 10/25

(86) International application number:
**PCT/JP2022/044457**

(87) International publication number:
**WO 2023/157425 (24.08.2023 Gazette 2023/34)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **17.02.2022 JP 2022022541**

(71) Applicant: **JFE Steel Corporation
Tokyo 100-0011 (JP)**

(72) Inventors:
• **MIZUTANI Akito
  Tokyo 100-0011 (JP)**

• **TAKASHITA Takuya
  Tokyo 100-0011 (JP)**
• **NAKAMURA Tetsuyuki
  Tokyo 100-0011 (JP)**
• **GAO Fagang
  Tokyo 100-0011 (JP)**
• **HORIUCHI Jun
  Tokyo 100-0011 (JP)**

(74) Representative: **Hoffmann Eitle
Patent- und Rechtsanwälte PartmbB
Arabellastraße 30
81925 München (DE)**

(54) **STAINLESS STEEL POWDER, STAINLESS STEEL MEMBER, AND STAINLESS STEEL MEMBER MANUFACTURING METHOD**

(57)   There is provided a stainless steel powder which can manufacture a stainless steel member having excellent high-temperature proof stress and excellent oxidation resistance.

The stainless steel powder has a chemical composition including, in % by mass: C: 0.20% or less; Si: 2.0% or less; Mn: 2.0% or less; P: 0.040% or less; S: 0.010% or less; Cr: 18.0 to 35.0%; Ni: 1.0% or less; Cu: 0.50 to 4.0%; Nb: 0.7 to 3.0%; Mo: 6.0% or less; W: 6.0% or less; N: 0.030% or less; and O: 0.10% or less, the balance being Fe and incidental impurities, and the composition satisfying the following inequality (1):

$$(Mo + W) \geq 2.0 \qquad (1)$$

where Mo and W represent the contents (% by mass) of Mo and W, respectively.

**Description**

Technical Field

The present invention relates to a stainless steel powder, and more particularly to a stainless steel powder suitable for manufacturing a member, such as an automotive exhaust system member or a heat exchanger, which has a complex shape and is required to have excellent high-temperature proof stress and oxidation resistance. The present invention also relates to a stainless steel member manufactured using the stainless steel powder and to a method for manufacturing the stainless steel member.

Background Art

In recent years, the use of metal additive manufacturing has been expanding. The current most widespread additive manufacturing technique is powder bed fusion (also called powder bed). The powder bed fusion method involves using a laser or an electron beam as a heat source to perform additive manufacturing while melting a metal powder as a raw material.

The greatest feature of additive manufacturing is that it can manufacture a shaped product, which cannot be formed by conventional forming methods, including its internal structure in addition to its external shape. Furthermore, additive manufacturing does not require consideration of the formability of a material. Therefore, even a Ni-based alloy or a Ti-based alloy, which is difficult to process and can only be formed into a limited shape by conventional forming methods, can be formed into any desired shape by additive manufacturing.

Taking advantage of such a feature, industrial use of metal additive manufacturing is advancing in the aerospace and aviation fields and in the medical field. For example, in the case of a member which, like a turbine blade, has a complex shape and requires high heat resistance, manufacturing a Ni alloy member by additive manufacturing has the advantages of shape optimization, reduced number of parts, etc. In the medical field, the use of additive manufacturing is advancing because of, for example, the advantage of being capable of manufacturing an artificial joint or an implant having a shape adapted to the patient.

Additive manufacturing is currently only applied to the aerospace and aviation fields and the medical field due to low mass productivity and high manufacturing costs. If these problems are solved, additive manufacturing will be applied also to fields where productivity and cost are important, such as the automotive field. In particular, in the automotive field, by applying additive manufacturing to the manufacture of, for example, an exhaust system member or a heat exchanger having a complex shape, it may be possible to optimize the shape, and to eliminate the need for bonding such as brazing or welding, thereby increasing the strength of the entire member. Thus, it may be possible to provide additional value to a product. With such a background, Fe-based alloys such as stainless steel, which are inexpensive as compared to Ni-based alloys and Ti-based alloys, are attracting attention as materials for use in additive manufacturing.

Patent Literatures 1 to 6 disclose a stainless steel powder for additive manufacturing.

Citation List

Patent Literature

PTL 1: International Publication No. WO 2019/139017
PTL 2: International Publication No. WO 2019/235014
PTL 3: International Publication No. WO 2020/110498
PTL 4: International Publication No. WO 2021/214958
PTL 5: Japanese Patent No. 6270563
PTL 6: Japanese Patent No. 6985940

Summary of Invention

Technical Problem

In recent years, improvement in fuel efficiency and reduction in carbon dioxide emissions have been required for automobiles. In order to meet such strict environmental regulations, the temperature of automotive exhaust gas has been on the rise. In particular, a member located near an engine, such as an exhaust manifold, is sometimes exposed to a high temperatures exceeding 1000°C. Accordingly, the SUS444 steel (18 mass % Cr-2 mass % Mo-0.5 mass % Nb), which has been used for high-temperature members until now, is sometimes insufficient in high-temperature proof stress. There is, therefore, a need for stainless steel having a high-temperature proof stress which is superior to that of SUS444, and an oxidation resistance which is comparable or superior to that of SUS444.

In order to increase the high-temperature proof stress of stainless steel, it is effective to increase the contents of elements such as Cr, Nb, Mo, W, Cu, and Al. In particular, Al has the effect of increasing not only the high-temperature proof stress but the oxidation resistance as well. However, when the contents of these elements are increased, the material strength increases excessively even at room temperature, making it difficult to produce a stainless steel sheet or a stainless steel pipe. Even if a stainless steel sheet or a stainless steel pipe can be produced, the poor formability of such a product often causes cracking during a forming process such as pressing or bending, resulting in a failure to obtain an exhaust manifold, a heat exchangers, etc. having a desired shape.

In view of the above, the present inventors focused on additive manufacturing as a method that enables the use of a high-alloy, high-performance material without being restricted by the productivity and the formability of the material. A metal powder is used as a material in additive manufacturing as performed by the powder bed method. A metal powder is easier to produce than a sheet material or a pipe material, leading to a significantly higher degree of freedom in the design of the components of the material. In the case of a member having a complex shape, such as an exhaust manifold or a heat exchanger, the member may be manufactured in a shorter period of time and the degree of freedom in the shape of the member is higher when the member is formed in one step by additive manufacturing than when the member is formed from a sheet or pipe material in multiple steps. Thus, the inventors considered that the use of additive manufacturing can significantly enhance the functionality of an automotive exhaust system member or an automotive heat exchanger.

Patent Literatures 1 to 6 each disclose a stainless steel powder for additive manufacturing. However, the materials disclosed in Patent Literatures 1 to 6 do not fully meet the high-temperature proof stress and the oxidation resistance required when they are applied to automotive exhaust system members, especially an exhaust manifold. Thus, there has been a need to develop a stainless steel powder that meets the required properties. Further, a stainless steel powder for additive manufacturing is required to have excellent manufacturability so that a member, which is being manufactured by additive manufacturing, will not undergo cracking due to rapid solidification that is characteristic of an additive manufacturing process.

The present invention has been made in view of the above situation. It is therefore an object of the present invention to provide a stainless steel powder which can manufacture a stainless steel member having excellent high-temperature proof stress and excellent oxidation resistance.

As used herein, "excellent high-temperature proof stress" means that the 0.2% proof stress, as measured by a tensile test performed at 800°C, is 60 MPa or more.

As used herein, "excellent oxidation resistance" means that after a test specimen, obtained by polishing the surface of a stainless steel member with #600 abrasive paper, is subjected to an oxidation test by holding the test specimen in the air at 800°C for 400 hours, the increase in the weight of the specimen due to oxidation is 20 $g/m^2$ or less, and no peeling of an oxide film has occurred. Solution to Problem

The present inventors, through their intensive studies to achieve the above object, found that stainless steel can achieve excellent high-temperature proof stress and excellent oxidation resistance when the stainless steel contains Cr in an increased amount of 18.0% by mass or more, Cu in an amount of 0.50% by mass or more, preferably 1.0% by mass or more, Nb in an amount of 0.7% by mass or more, and one or both of Mo and W in an amount of 2.0% by mass or more in total. The present inventors also found that the stainless steel can achieve superior high-temperature proof stress and oxidation resistance when it contains Al in an amount of 0.3% by mass or more, and that the stainless steel can achieve particularly excellent high-temperature proof stress and oxidation resistance when the Al content is increased to 2.0% by mass or more.

It is conventionally difficult to form such high-alloy steel into a sheet material or a pipe material. On the other hand, a stainless steel member having a complex shape and having exceptional properties can be obtained by producing a powder of such a metal, and performing additive manufacturing using the metal powder as a material.

Especially in consideration of application to an exhaust manifold, it is preferred that the stainless steel have excellent oxidation resistance and, in addition, have a high-temperature proof stress which is superior to that of SUS444. More specifically, the stainless steel preferably has a 0.2% proof stress at 800°C of 60 MPa or more.

The present invention was accomplished based on the above findings and on an additional study. The present invention can be summarized as follows.

[1] A stainless steel powder having a chemical composition comprising, in % by mass:

C: 0.20% or less;
Si: 2.0% or less;
Mn: 2.0% or less;

P: 0.040% or less;
S: 0.010% or less;
Cr: 18.0 to 35.0%;
Ni: 1.0% or less;
Cu: 0.50 to 4.0%;
Nb: 0.7 to 3.0%;
Mo: 6.0% or less;
W: 6.0% or less;
N: 0.030% or less; and
O: 0.10% or less,
the balance being Fe and incidental impurities, and the composition satisfying the following inequality (1):

$$(Mo + W) \geq 2.0 \qquad (1)$$

where Mo and W represent the contents (% by mass) of Mo and W, respectively.

[2] The stainless steel powder as set forth in [1], wherein the content of Cu is, in % by mass, Cu: 1.0 to 4.0%.
[3] The stainless steel powder as set forth in [1] or [2], wherein the chemical composition further comprises, in % by mass, Al: 6.0% or less.
[4] The stainless steel powder as set forth in any one of [1] to [3], wherein the chemical composition further comprises, in % by mass, at least one selected from the following:

Ti: 0.30% or less;
V: 0.50% or less;
Co: 0.50% or less;
B: 0.0100% or less;
Zr: 0.50% or less;
Ca: 0.0100% or less;
Mg: 0.0050% or less;
REM: 0.50% or less;
Sn: 0.50% or less; and
Sb: 0.50% or less.

[5] A stainless steel member having a chemical composition comprising, in % by mass:

C: 0.20% or less;
Si: 2.0% or less;
Mn: 2.0% or less;
P: 0.040% or less;
S: 0.010% or less;
Cr: 18.0 to 35.0%;
Ni: 1.0% or less;
Cu: 0.50 to 4.0%;
Nb: 0.7 to 3.0%;
Mo: 6.0% or less;
W: 6.0% or less;
N: 0.030% or less; and
O: 0.10% or less,
the balance being Fe and incidental impurities, and the composition satisfying the following inequality (1):

$$(Mo + W) \geq 2.0 \qquad (1)$$

where Mo and W represent the contents (% by mass) of Mo and W, respectively.

[6] The stainless steel member as set forth in [5], wherein the content of Cu is, in % by mass, Cu: 1.0 to 4.0%.
[7] The stainless steel member as set forth in [5] or [6], wherein the chemical composition further comprises, in % by mass, Al: 6.0% or less.

[8] The stainless steel member as set forth in any one of [5] to [7], wherein the chemical composition further comprises, in % by mass, at least one selected from the following:

Ti: 0.30% or less;
V: 0.50% or less;
Co: 0.50% or less;
B: 0.0100% or less;
Zr: 0.50% or less;
Ca: 0.0100% or less;
Mg: 0.0050% or less;
REM: 0.50% or less;
Sn: 0.50% or less; and
Sb: 0.50% or less.

[9] A method for manufacturing a stainless steel member, comprising manufacturing a stainless steel member by additive manufacturing using the stainless steel powder as set forth in any one of [1] to [4] above.

Advantageous Effects of Invention

According to the present invention, it is possible to provide a stainless steel powder which can manufacture a stainless steel member having excellent high-temperature proof stress and excellent oxidation resistance.

According to the present invention, it is possible to provide a stainless steel powder which can advantageously be used for manufacturing of a stainless steel member, in particular for manufacturing of a stainless steel member by additive manufacturing. The stainless steel powder of the present invention is suitable as a material for a stainless steel member, such as an automotive exhaust system member or an automotive heat exchanger, which has a complex shape and is required to have excellent heat resistance, and particularly suitable as a material for use in the manufacturing of such a stainless steel member by additive manufacturing.

A stainless steel member, manufactured using the stainless steel powder of the present invention, has excellent high-temperature proof stress and excellent oxidation resistance. Further, the member does not undergo cracking due to a rapid change in the temperature during additive manufacturing. Thus, the stainless steel powder has excellent manufacturability. A stainless steel member, obtained according to the present invention, is particularly suitable as a member such as an automotive exhaust system member or an automotive heat exchanger, which has a complex shape and is required to have excellent heat resistance. Description of Embodiments

The present invention will now be described based on the following embodiments.

First, the chemical composition of the stainless steel powder and stainless steel member of the present invention will be described. Units in the chemical composition are all "% by mass", which will be expressed simply as "%" unless otherwise specified.

C: 0.20% or less

C has the effect of increasing the strength of the steel through the formation of a carbide with an element such as Nb. In order to achieve this effect, the C content is preferably 0.0050% or more, more preferably 0.03% or more. On the other hand, if the C content exceeds 0.20%, the steel will be excessively hardened, leading to a reduction in the toughness of the stainless steel member. Further, if the C content exceeds 0.20%, solidification cracking is likely to occur during additive manufacturing. Thus, the manufacturability is poor. Therefore, the C content is 0.20% or less. The C content is preferably 0.15% or less.

Si: 2.0% or less

Si has the effect of improving the oxidation resistance of the steel. In order to achieve this effect, the Si content is preferably 0.01% or more. However, if the Si content exceeds 2.0%, the steel will be excessively hardened, leading to a reduction in the toughness of the steel. Therefore, the Si content is 2.0% or less. The Si content is preferably 1.5% or less, more preferably 1.0% or less.

Mn: 2.0% or less

Mn has the effect of reducing the oxidation rate and preventing peeling of scales. In order to achieve this effect, the Mn content is preferably 0.01% or more. On the other hand, Mn is an austenite phase forming element. If the Mn content exceeds 2.0%, an austenite phase will be formed, resulting in a reduction in the thermal fatigue property. Therefore, the Mn content is 2.0% or less. The Mn content is preferably 1.0% or less.

P: 0.040% or less

P is an element which reduces the corrosion resistance of the steel, and therefore it is preferably contained in a small amount; the upper limit of the P content is 0.040%. The P content is preferably 0.030% or less, more preferably 0.020% or less. The lower limit of the P content is not particularly limited. However, excessive dephosphorization leads to an increase in cost. Therefore, the P content is preferably 0.005% or more.

S: 0.010% or less

S is an element which reduces the corrosion resistance of the steel, and therefore it is preferably contained in a small amount; the upper limit of the S content is 0.010%. The S content is preferably 0.005% or less, more preferably 0.003% or less. The lower limit of the S content is not particularly limited. However, excessive desulfurization leads to an increase in cost. Therefore, the S content is preferably 0.0005% or more.

Cr: 18.0 to 35.0%

Cr is an important element which improves the corrosion resistance and the oxidation resistance of the steel. In order to achieve the intended excellent oxidation resistance which is comparable or superior to that of SUS444, the Cr content needs to be 18.0% or more. However, if the Cr content exceeds 35.0%, the toughness of the stainless steel member will be low. Therefore, the Cr content is in the range of 18.0 to 35.0%. The Cr content is preferably 20.0% or more, more preferably 22.0% or more. Further, the Cr content is preferably 30.0% or less, more preferably 27.0% or less.

Ni: 1.0% or less

Ni has the effect of increasing the toughness of the stainless steel member. In order to achieve this effect, the Ni content is preferably 0.01% or more. On the other hand, Ni is an element which promotes the formation of an austenite phase. If the Ni content exceeds 1.0%, an austenite phase will be formed, resulting in a reduction in the thermal fatigue property and a reduction in the oxidation resistance. Therefore, the Ni content is 1.0% or less. The Ni content is preferably 0.5% or less.

Cu: 0.50 to 4.0%

Cu is an element which precipitates as $\varepsilon$-Cu in steel, thereby increasing the high-temperature proof stress. This effect can be achieved by making the Cu content 0.50% or more, preferably 1.0% or more. However, if the Cu content exceeds 4.0%, the steel will be excessively hardened, leading to a reduction in the toughness of the stainless steel member. Therefore, the Cu content is in the range of 0.50 to 4.0%, preferably in the range of 1.0 to 4.0%. The Cu content is more preferably 1.5% or more. Further, the Cu content is preferably 3.0% or less.

Nb: 0.7 to 3.0%

Nb as a solid solution strengthening element has the effect of increasing the high-temperature proof stress of the steel. Nb also has the effect of increasing the high-temperature proof stress of the steel through the formation of a carbide or a nitride with C or N in the steel. These effects can be achieved when the Nb content is 0.7% or more. However, if the Nb content exceeds 3.0%, an intermetallic compound phase will be formed, resulting in a reduction in the toughness of the stainless steel member. Therefore, the Nb content is in the range of 0.7 to 3.0%. The Nb content is preferably in the range of 0.7 to 2.0%, more preferably in the range of 0.7 to 1.5%.

Mo: 6.0% or less, W: 6.0% or less, Mo and W satisfying the following inequality (1): (Mo + W) $\geq$ 2.0 (1), where Mo and W represent the contents (% by mass) of Mo and W, respectively

Mo and W, as solid solution strengthening elements, have the effect of increasing the high-temperature proof stress of the steel. In order to achieve this effect, the steel needs to contain one or both of Mo and W in an amount of at least 2.0% in total. Thus, the above inequality (1) needs to be satisfied. The total content of one or both of Mo and W is preferably 3.0% or more. On the other hand, if the content of Mo and the content of W each exceed 6.0%, an intermetallic compound will be precipitated, leading to a reduction in the toughness of the stainless steel member. Therefore, the content of Mo and the content of W are each 6.0% or less. The content of Mo and the content of W are each preferably 5.0% or less. For the same reason, the total content of one or both of Mo and W is preferably 6.0% or less. The lower limit of each of the content of Mo and the content of W is not particularly limited. The lower limit of each of the content of Mo and the content of W may be 0% by mass as long as the above inequality (1) can be satisfied.

N: 0.030% or less

N has the effect of increasing the strength of the steel through the formation of a nitride with an element such as Nb. In order to achieve this effect, the N content is preferably 0.0030% or more, more preferably 0.0050% or more. On the other hand, if the N content exceeds 0.030%, the toughness of the stainless steel member will be low. Therefore, the N content is 0.030% or less. The N content is preferably 0.020% or less.

O: 0.10% or less

The stainless steel powder of the present invention can be produced by a gas atomization process or a water atomization process. O is likely to exist in the metal powder produced by such a method. In order to reduce the amount of oxide inclusions formed in a shaped product, the O content is 0.10% or less. The O content is preferably 0.05% or less. The lower limit of the O content is not particularly limited. However, excessive deoxidization leads to an increase in cost. Therefore, the O content is preferably 0.005% or more.

The ferritic stainless steel powder and stainless steel member of the present invention have a chemical composition comprising the above-described components, with the balance being Fe and incidental impurities.

In addition to the above-described components, the stainless steel powder and stainless steel member of the present invention may further contain Al: 6.0% or less.

Al: 6.0% or less

Al is an element which acts as a deoxidizing agent. In order to achieve this effect, the Al content is preferably 0.001% or more. A further increase in the Al content produces the effect of significantly improving the oxidation resistance of the steel through the formation of an Al oxide film in the surface. In order to achieve this effect, the Al content is more preferably 0.3% or more, still more preferably 2.0% or more, even more preferably 3.0% or more, and particularly preferably 4.0% or more. However, if the Al content exceeds 6.0%, the toughness of the stainless steel member will be low. Furthermore, the coefficient of linear expansion of the steel increases, leading to a reduction in the thermal fatigue property of the stainless steel member. Therefore, the Al content is 6.0% or less.

In addition to the above-described components, the stainless steel powder and stainless steel member of the present invention may further contain at least one selected from Ti: 0.30% or less, V: 0.50% or less, Co: 0.50% or less, B: 0.0100% or less, Zr: 0.50% or less, Ca: 0.0100% or less, Mg: 0.0050% or less, REM: 0.50% or less, Sn: 0.50% or less, and Sb: 0.50 % or less.

Ti: 0.30% or less

Ti has the effect of increasing the strength of the steel through the formation of a carbide or a nitride with C or N in the steel. In order to achieve this effect, the Ti content is preferably 0.01% or more. However, if the Ti content exceeds 0.30%, the steel will be excessively hardened, leading to a reduction in the toughness of the stainless steel member. Therefore, when Ti is contained, the Ti content is in the range of up to 0.30%. The Ti content is preferably 0.20% or less.

V: 0.50% or less

V has the effect of increasing the strength of the steel through the formation of a carbide or a nitride with C or N in the steel. In order to achieve this effect, the V content is preferably 0.01% or more. However, if the V content exceeds 0.50%, the steel will be excessively hardened, leading to a reduction in the toughness of the stainless steel member. Therefore, when V is contained, the V content is in the range of up to 0.50%. The V content is preferably 0.30% or less.

Co: 0.50% or less

Co is an element which increases the toughness of the stainless steel member. In order to achieve this effect, the Co content is preferably 0.01% or more. However, if the Co content exceeds 0.50%, the steel will be excessively hardened, and the toughness will rather be reduced. Therefore, when Co is contained, the Co content is in the range of up to 0.50%.

B: 0.0100% or less

B has the effect of strengthening the grain boundaries, thereby increases the toughness. In order to achieve this effect, the B content is preferably 0.0002% or more. However, if the B content exceeds 0.0100%, the steel will be excessively hardened, and the toughness of the stainless steel member will rather be reduced. Therefore, when B is contained, the B content is in the range of up to 0.0100%. The B content is more preferably 0.0005% or more. Further, the B content is more preferably 0.0050% or less.

Zr: 0.50% or less

Zr has the effect of improving the adhesion of an oxide film, thereby improving the oxidation resistance. In order to achieve this effect, the Zr content is preferably 0.01% or more. However, if the Zr content exceeds 0.50%, an intermetallic compound phase will be precipitated, and therefore the oxidation resistance will rather be reduced. Therefore, when Zr is contained, the Zr content is in the range of up to 0.50%. The Zr content is preferably 0.30% or less, more preferably 0.10% or less.

Ca: 0.0100% or less

Ca has the effect of lowering the melting point of oxide inclusions, thereby reducing the inclusions in molten steel during the production of the metal powder. In order to achieve this effect, the Ca content is preferably 0.0002% or more. However, if the Ca content exceeds 0.0100%, the toughness of the stainless steel member will be low. Therefore, when Ca is contained, the Ca content is in the range of up to 0.0100%. The Ca content is more preferably 0.0005% or more. Further, the Ca content is preferably 0.0050% or less, more preferably 0.0030% or less.

Mg: 0.0050% or less

Mg is an element which has the effect of improving the corrosion resistance. This effect can be achieved when Mg is contained in an amount of 0.0002% or more. Therefore, when Mg is contained, the Mg content is preferably in the range of not less than 0.0002%. However, if the Mg content exceeds 0.0050%, the toughness of the stainless steel member will be low. Therefore, when Mg is contained, the Mg content is in the range of up to 0.0050%. The Mg content is more preferably 0.0005% or more. Further, the Mg content is preferably 0.0035% or less, more preferably 0.0020% or less.

REM: 0.50% or less

REM (rare earth element) has the effect of improving the adhesion of an oxide film, thereby improving the oxidation resistance. In order to achieve this effect, the REM content is preferably 0.01% or more. However, if the REM content exceeds 0.50%, the toughness of the stainless steel member will be low. Therefore, when REM is contained, the REM content is in the range of up to 0.50%. The REM content is more preferably 0.05% or more, and still more preferably 0.10% or more. Further, the REM content is preferably 0.30% or less, more preferably 0.20% or less. REM is a general term for Sc, Y, and 15 elements from lanthanum (La) of atomic number 57 to lutetium (Lu) of atomic number 71, and the REM content herein refers to the total content of these elements.

Sn: 0.50% or less

Sn has the effect of preventing surface roughening of a shaped product upon polishing of its surface. In order to achieve this effect, the Sn content is preferably 0.01% or more. However, if the Sn content exceeds 0.50%, solidification cracking is likely to occur. Thus, the manufacturability is poor. Therefore, when Sn is contained, the Sn content is in the range of up to 0.50%. The Sn content is more preferably 0.03% or more, and still more preferably 0.05% or more. Further, the Sn content is preferably 0.30% or less, more preferably 0.10% or less.

Sb: 0.50% or less

Sb has the effect of preventing surface roughening of a shaped product upon polishing of its surface. In order to achieve this effect, the Sb content is preferably 0.01% or more. However, if the Sb content exceeds 0.50%, solidification cracking is likely to occur. Thus, the manufacturability is poor. Therefore, when Sb is contained, the Sb content is in the range of up to 0.50%. The Sb content is more preferably 0.03% or more, and still more preferably 0.05% or more. Further, the Sb content is preferably 0.30% or less, more preferably 0.10% or less.

A preferred property (particle size) of the stainless steel powder of the present invention will now be described.

The stainless steel powder of the present invention preferably has a volume-based median diameter $D_{50}$ of not less than 10 um and not more than 200 um. If the median diameter $D_{50}$ of the stainless steel powder is too small, uneven filling of the powder will occur due to reduced fluidity of the powder, causing the formation of defects, such as voids, during additive manufacturing. This may result in a reduction in the strength, the low-temperature toughness and the corrosion resistance of a steel member manufactured using such a steel powder as a raw material. When the median diameter $D_{50}$ of the stainless steel powder is 10 um or more, it is easy to suppress the formation of defects, such as voids, during additive manufacturing. Therefore, the median diameter $D_{50}$ of the stainless steel powder is preferably 10 um or more. The median diameter $D_{50}$ of the stainless steel powder is more preferably 20 um or more, and still more preferably 30 um or more. On the other hand, if the median diameter $D_{50}$ of the stainless steel powder is too large, it will cause the formation of defects, such as voids, during additive manufacturing. The defects may lead to a reduction in the strength, the low-temperature toughness and the corrosion resistance of a steel member manufactured using such a steel powder as a raw material. When the median diameter $D_{50}$ of the stainless steel powder is 200 um or less, it is easy to suppress the formation of defects, such as voids, during additive manufacturing. Therefore, the median diameter $D_{50}$ of the stainless steel powder is preferably 200 $\mu$m or less. The median diameter $D_{50}$ of the stainless steel powder is more preferably 150 um or less, and still more preferably 100 um or less.

The median diameter $D_{50}$ of the stainless steel powder refers to a median diameter (50% particle diameter) in the volume cumulative distribution of the stainless steel powder. A laser diffraction particle size analyzer can be used to measure the median diameter of the stainless steel powder. In the present invention, the median diameter $D_{50}$ of the stainless steel powder is measured by the following method.

LA-950V2, manufactured by HORIBA, Ltd, is an example of the laser diffraction particle size analyzer. While any other device may also be used, it is preferred to use one in which the lower limit of the measurable particle size range is 0.1 um or less and the upper limit of the measurable particle size range is 200 um or more in order to perform accurate measurement. A laser diffraction particle size analyzer applies a laser beam to a solvent in which the stainless steel powder is dispersed, and measures the particle size distribution and the average particle size (median diameter) of the stainless steel powder from the diffraction and scattering intensity of the laser beam. Ethanol, which disperses the stainless steel powder well and is easy to handle, is preferably used as the solvent for dispersing the stainless steel powder. The use of a solvent like water, which has a strong van der Waals force and poorly disperses the stainless steel powder, is undesirable because the powder may agglomerate during measurement, resulting in a measured value which is higher than the true average particle size. The ethanol solution containing the stainless steel powder is preferably subjected to an ultrasonic dispersion treatment before performing the measurement.

An appropriate period of time for the dispersion treatment varies depending on the stainless steel powder to be measured. Therefore, the dispersion treatment is performed in seven stages at 10-minute intervals during 0 to 60 minutes, and after each dispersion treatment, measurement of the particle size distribution and the average particle size (median diameter) of the stainless steel powder is performed. During each measurement, the solvent is stirred to prevent agglomeration of the stainless steel powder. Among the average particle sizes (median diameters) obtained in the seven measurements, each performed after each of the dispersion treatments carried out at 10-minute intervals, the lowest value is used as the median diameter $D_{50}$ of the stainless steel powder.

A preferred embodiment of a method for producing the stainless steel powder of the present invention will now be described.

The stainless steel powder of the present invention is provided as a final product through the following series of production steps. For example, the stainless steel powder of the present invention is produced through the steps of: melting - formation of ingot - re-melting of master ingot - production of powder by atomization process.

First, in the melting - formation of ingot steps, the above-described elements, each in a predetermined amount, are melted as materials and alloyed in a high-frequency vacuum melting furnace, and the melt is cast into an ingot (master ingot). The melting step is preferably performed under the conditions of: a reduced-pressure Ar atmosphere and a melting temperature of 1600°C or more, for the following reasons. If the melting temperature is too low, molten steel will solidify when it is dropped from a nozzle, causing clogging of the nozzle. The melting is preferably performed in an Ar atmosphere under reduced pressure from the viewpoint of preventing oxidation of molten steel. A melting furnace for use in the melting step is not limited to a high-frequency vacuum melting furnace; another melting furnace (e.g., a direct electrical heating furnace) can also be used in the present invention.

In the subsequent re-melting of master ingot - atomization steps, the cast master ingot as a material is re-melted in a melting furnace such as a high-frequency or induction furnace, and the melt is subjected to a gas atomization process using an inert gas, such as Ar or He, to obtain a stainless steel powder with a low oxygen content.

Thereafter, the stainless steel powder is preferably classified so that it has the above-described median diameter $D_{50}$, and can be used as the stainless steel powder of the present invention. The classification may be performed using a sieve, or using any other method such as airflow classification. A water atomization process may be used instead of the gas atomization process.

An embodiment of the stainless steel member manufacturing method of the present invention will now be described.

First, using the above-described stainless steel powder of the present invention as a material, a shaped product (three-dimensional structure) of stainless steel is manufactured, for example, by an additive manufacturing process (metal powder additive manufacturing process). A 3D printing process, for example, can be used as the additive manufacturing process. A laser-type powder-bed 3D printer is used in this embodiment. No particular limitation is placed on the operating conditions of the 3D printer. For example, the laser output of the printer is preferably set to 150 to 300 W and the scan speed is preferably set to 700 to 1100 mm/s from the viewpoint of preventing excessive melting or insufficient melting. Subsequently, the shaped product is subjected to a heat treatment, as necessary, to obtain a stainless steel member according to the present invention. In the heat treatment step, the shaped product is held at a temperature in the range of 850 to 1200°C for 1 minute or more, followed by air cooling. Preferably, the shaped product is held at a temperature in the range of 1000 to 1200°C for 10 minutes or more, followed by air cooling.

EXAMPLES

The present invention will now be described by reference to the following examples. First, raw material powders, having the chemical compositions A to K shown in Table 1, were produced by a gas atomization process. The powders produced were classified to obtain stainless steel powders whose volume-based median diameters $D_{50}$ were adjusted to the values shown in Table 1. Using the powders as a material, stainless steel members (steel members A to K) were manufactured by a powder bed process. The manufacturing of each stainless steel member was performed using an apparatus M290, manufactured by EOS Corporation. Using a laser as a heat source for melting each stainless steel powder, additive manufacturing was performed under the conditions of: a scan speed of 800 m/s, an output of 200 W, and a powder layer thickness of 40 um per layer. The resulting shaped product had a plate-like shape having a width of 35 mm, a length of 180 mm, and a thickness of 4 mm in the layering direction. The shaped product was subjected to a heat treatment by holding it in the air at 1000°C for 1 hour, followed by air cooling. Test pieces for use in the below-described tests and property evaluations were then taken from the product.

The steel powder K has a chemical composition equivalent to SUS444. The sample L is a hot-rolled and annealed steel sheet which has a chemical composition equivalent to SUS444, and which has been formed to a thickness of 4 mm by conventional small steel ingot melting, hot rolling, and hot-rolled sheet annealing.

(1) Manufacturability

The manufacturability was evaluated based on the presence or absence of cracks in the stainless steel members (steel members A to K) after additive manufacturing. First, the surfaces (the two sides with the largest area) of each shaped product after the heat treatment were ground by a thickness of 1 mm. The ground surfaces were subjected to a penetrant test according to the method described in JIS Z 2343-1 (2017) to check the presence or absence of cracks. When no crack having a length of 1.0 mm or more was observed in a shaped product, the product was rated "o". When a crack(s) having a length of 1.0 mm or more was observed in a shaped product, the product was rated "×". The rating "o" was evaluated as excellent manufacturability.

(2) High-Temperature Proof Stress

The high-temperature proof stress was evaluated in terms of 0.2% proof stress ($\sigma_{0.2}$) as determined by a tensile test at 800°C. A plate-shaped tensile test piece, having a thickness of 4 mm, a parallel portion width of 10 mm, and a mark-to-mark distance of 50 mm, was taken from each of the shaped products (steel members A to K) after the heat treatment, or from the hot-rolled and annealed steel sheet (steel sheet L). Each test piece was held at a test temperature of 800°C for 15 minutes, and then subjected to a tensile test to determine the 0.2% proof stress. The tensile rate was 0.2 mm/min.

The measured 0.2% proof stress values were rated as follows: "×" for less than 60 MPa; "o" for not less than 60 MPa and less than 100 MPa; and "◎" for not less than 100 MPa. The rating "o" or "◎" was evaluated as excellent high-temperature proof stress.

(3) Oxidation Resistance

The oxidation resistance was evaluated by an oxidation test. First, the surfaces (the two sides with the largest area) of each of the shaped products (steel members A to K) after the heat treatment or the hot-rolled and annealed steel sheet (steel sheet L) were ground by a thickness of 1 mm to obtain a plate-shaped test piece having a thickness of 2 mm. An oxidation test piece of 20 mm × 30 mm × 2.0 mm was taken from the test piece, and its surface was polished with #600 abrasive paper. The oxidation test piece was subjected to an oxidation test by holding it in the air at a high temperature for 400 hours, and its oxidation resistance was evaluated. The test was conducted at two temperatures, 800°C and 1100°C. When the weight of the test piece increased due to oxidation by an amount exceeding 20 g/m$^2$ after the oxidation test, or when peeling of a surface oxide film occurred, the test piece was rated as unacceptable ($\times$). When the increase in the weight of the test piece was 20 g/m$^2$ or less, and when no peeling of a surface oxide film occurred, the test piece was rated as acceptable (o).

The oxidation resistance of a test piece was rated "$\times$" when the test piece was evaluated as unacceptable in both of the test performed at 800°C and the test performed at 1100°C, rated "∘" when the test piece was evaluated as acceptable in the test performed at 800°C and evaluated as unacceptable in the test performed at 1100°C, and rated "◎" when the test piece was evaluated as acceptable in both of the test performed at 800°C and the test performed at 1100°C. The rating "o" or "◎" was evaluated as excellent oxidation resistance.

Table 2 shows the evaluation results for the properties (1) to (3). The results indicate that the steel members within the scope of the present invention have excellent high-temperature proof stress and oxidation resistance, and are excellent in the manufacturability.

In particular, the steel members E to I, each manufactured using the steel powder containing Al, were evaluated as acceptable even in the oxidation resistance test performed at 1100°C, and thus had superior oxidation resistance.

[Table 1]

| Sample | | C | Si | Mn | P | S | Cr | Ni | Cu | Nb | Mo | W | N | O | Mo+W | Al | Other components | $D_{50}$ (μm) | Remarks |
|---|---|---|---|---|---|---|---|---|---|---|---|---|---|---|---|---|---|---|---|
| Steel powder | A | 0.14 | 0.34 | 0.11 | 0.007 | 0.004 | 25.4 | 0.01 | 1.88 | 0.91 | 1.1 | 3.0 | 0.010 | 0.039 | 4.1 | - | | 38 | Inventive Example |
| | B | 0.01 | 0.35 | 0.10 | 0.006 | 0.003 | 25.6 | 0.01 | 1.89 | 0.92 | 1.3 | 2.3 | 0.011 | 0.045 | 3.6 | - | | 34 | Inventive Example |
| | C | 0.15 | 0.34 | 0.09 | 0.008 | 0.003 | 30.2 | 0.01 | 0.83 | 0.89 | - | 3.8 | 0.013 | 0.043 | 3.8 | - | | 47 | Inventive Example |
| | D | 0.15 | 0.33 | 0.10 | 0.008 | 0.004 | 33.4 | 0.85 | 0.55 | 0.92 | 2.1 | - | 0.011 | 0.035 | 2.1 | - | | 50 | Inventive Example |
| | E | 0.15 | 0.11 | 0.12 | 0.006 | 0.004 | 25.6 | 0.02 | 2.24 | 1.22 | - | 4.1 | 0.010 | 0.032 | 4.1 | 4.4 | | 40 | Inventive Example |
| | F | 0.01 | 0.10 | 0.11 | 0.008 | 0.003 | 25.3 | 0.01 | 2.21 | 2.53 | - | 4.0 | 0.013 | 0.042 | 4.0 | 4.3 | | 32 | Inventive Example |
| | G | 0.16 | 0.10 | 0.10 | 0.007 | 0.004 | 18.8 | 0.02 | 3.58 | 0.90 | 1.1 | 4.2 | 0.010 | 0.043 | 5.3 | 4.1 | | 30 | Inventive Example |
| | H | 0.15 | 0.10 | 0.11 | 0.007 | 0.005 | 25.5 | 0.01 | 2.28 | 1.24 | 5.5 | - | 0.010 | 0.038 | 5.5 | 2.2 | Ti:0.08, Co: 0.09 | 35 | Inventive Example |
| | I | 0.08 | 1.82 | 0.15 | 0.007 | 0.003 | 25.3 | 0.12 | 1.53 | 0.85 | 1.2 | 3.1 | 0.012 | 0.041 | 4.3 | 5.8 | V:0.10, B: 0.0031, Zr: 0.08, Ca: 0.0053, Mg: 0.0025, La: 0.09 | 42 | Inventive Example |
| | J | 0.15 | 0.34 | 0.16 | 0.007 | 0.004 | 25.5 | 0.03 | 1.81 | 0.88 | 2.1 | 3.4 | 0.009 | 0.035 | 5.5 | - | Sn:0.08, Sb: 0.07 | 41 | Inventive Example |
| | K | 0.003 | 0.48 | 0.48 | 0.008 | 0.003 | 18.5 | 0.01 | <u>-</u> | <u>0.56</u> | 1.9 | - | 0.009 | 0.035 | <u>1.9</u> | - | | 29 | Comp. Example |
| Steel sheet | L | 0.004 | 0.50 | 0.50 | 0.008 | 0.003 | 18.7 | 0.01 | <u>-</u> | <u>0.59</u> | 2.0 | - | 0.009 | 0.004 | 2.0 | - | | - | Comp. Example |

EP 4 450 659 A1

EP 4 450 659 A1

Underline indicates that the value is outside the scope of the present invention.

[Table 2]

| Steel member | (1) Manufacturability | (2) High-temperature proof stress | | (3) Oxidation resistance | | | Remarks |
|---|---|---|---|---|---|---|---|
| | Evaluation | $\sigma_{0.2}$ (MPa) | Evaluation | 800°C | 1100°C | Evaluation | |
| A | ○ | 108 | ◎ | ○ | × | ○ | Inventive Example |
| B | ○ | 85 | ○ | ○ | × | ○ | Inventive Example |
| C | ○ | 78 | ○ | ○ | × | ○ | Inventive Example |
| D | ○ | 69 | ○ | ○ | × | ○ | Inventive Example |
| E | ○ | 113 | ◎ | ○ | ○ | ◎ | Inventive Example |
| F | ○ | 107 | ◎ | ○ | ○ | ◎ | Inventive Example |
| G | ○ | 118 | ◎ | ○ | ○ | ◎ | Inventive Example |
| H | ○ | 119 | ◎ | ○ | ○ | ◎ | Inventive Example |
| I | ○ | 93 | ○ | ○ | ○ | ◎ | Inventive Example |
| J | ○ | 112 | ◎ | ○ | × | ○ | Inventive Example |
| K | ○ | 56 | × | ○ | × | ○ | Comp. Example |
| L | - | 46 | × | ○ | × | ○ | Comp. Example |

Industrial Applicability

The use of the stainless steel powder of the present invention can manufacture a stainless steel member having excellent high-temperature proof stress and oxidation resistance without causing solidification cracking. A stainless steel member obtained by the present invention can advantageously be used particularly as an automotive heat exchanger or an automotive exhaust system member. Further, the present invention can find various other applications.

**Claims**

1.  A stainless steel powder having a chemical composition comprising, in % by mass:

    C: 0.20% or less;
    Si: 2.0% or less;
    Mn: 2.0% or less;
    P: 0.040% or less;
    S: 0.010% or less;
    Cr: 18.0 to 35.0%;
    Ni: 1.0% or less;

Cu: 0.50 to 4.0%;
Nb: 0.7 to 3.0%;
Mo: 6.0% or less;
W: 6.0% or less;
N: 0.030% or less; and
O: 0.10% or less,
the balance being Fe and incidental impurities, and the composition satisfying the following inequality (1):

$$(Mo + W) \geq 2.0 \qquad (1)$$

where Mo and W represent the contents (% by mass) of Mo and W, respectively.

2. The stainless steel powder according to claim 1, wherein the content of Cu is, in % by mass, Cu: 1.0 to 4.0%.

3. The stainless steel powder according to claim 1, wherein the chemical composition further comprises, in % by mass, Al: 6.0% or less.

4. The stainless steel powder according to claim 2, wherein the chemical composition further comprises, in % by mass, Al: 6.0% or less.

5. The stainless steel powder according to any one of claims 1 to 4, wherein the chemical composition further comprises, in % by mass, at least one selected from the following:

Ti: 0.30% or less;
V: 0.50% or less;
Co: 0.50% or less;
B: 0.0100% or less;
Zr: 0.50% or less;
Ca: 0.0100% or less;
Mg: 0.0050% or less;
REM: 0.50% or less;
Sn: 0.50% or less; and
Sb: 0.50% or less.

6. A stainless steel member having a chemical composition comprising, in % by mass:

C: 0.20% or less;
Si: 2.0% or less;
Mn: 2.0% or less;
P: 0.040% or less;
S: 0.010% or less;
Cr: 18.0 to 35.0%;
Ni: 1.0% or less;
Cu: 0.50 to 4.0%;
Nb: 0.7 to 3.0%;
Mo: 6.0% or less;
W: 6.0% or less;
N: 0.030% or less; and
O: 0.10% or less,
the balance being Fe and incidental impurities, and the composition satisfying the following inequality (1):

$$(Mo + W) \geq 2.0 \qquad (1)$$

where Mo and W represent the contents (% by mass) of Mo and W, respectively.

7. The stainless steel member according to claim 6, wherein the content of Cu is, in % by mass, Cu: 1.0 to 4.0%.

8. The stainless steel member according to claim 6, wherein the chemical composition further comprises, in % by mass, Al: 6.0% or less.

9. The stainless steel member according to claim 7, wherein the chemical composition further comprises, in % by mass, Al: 6.0% or less.

10. The stainless steel member according to any one of claims 6 to 9, wherein the chemical composition further comprises, in % by mass, at least one selected from the following:

Ti: 0.30% or less;
V: 0.50% or less;
Co: 0.50% or less;
B: 0.0100% or less;
Zr: 0.50% or less;
Ca: 0.0100% or less;
Mg: 0.0050% or less;
REM: 0.50% or less;
Sn: 0.50% or less; and
Sb: 0.50% or less.

11. A method for manufacturing a stainless steel member, comprising manufacturing a stainless steel member by additive manufacturing using the stainless steel powder according to any one of claims 1 to 4.

12. A method for manufacturing a stainless steel member, comprising manufacturing a stainless steel member by additive manufacturing using the stainless steel powder according to claim 5.

# EP 4 450 659 A1

<table>
<tr><td colspan="2" rowspan="2"><strong>INTERNATIONAL SEARCH REPORT</strong></td><td>International application No.</td></tr>
<tr><td><strong>PCT/JP2022/044457</strong></td></tr>
</table>

**A. CLASSIFICATION OF SUBJECT MATTER**

***C22C 33/02***(2006.01)i; ***C22C 38/00***(2006.01)i; ***C22C 38/58***(2006.01)i; ***C22C 38/60***(2006.01)i; ***B33Y 80/00***(2015.01)i;
***B33Y 70/00***(2020.01)i; ***B22F 10/28***(2021.01)i; ***B22F 1/00***(2022.01)i
FI: C22C38/00 302Z; C22C38/58; C22C38/60; B22F1/00 T; C22C33/02 C; B22F10/28; B33Y70/00; B33Y80/00

According to International Patent Classification (IPC) or to both national classification and IPC

**B. FIELDS SEARCHED**

Minimum documentation searched (classification system followed by classification symbols)

C22C33/02; C22C38/00; C22C38/58; C22C38/60; B33Y80/00; B33Y70/00; B22F10/28; B22F1/00

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 2012-117084 A (NIPPON STEEL & SUMIKIN STAINLESS STEEL CORP) 21 June 2012 (2012-06-21) <br> paragraphs [0016]-[0038], [0046], table 1 | 6-10 |
| X | WO 2014/136866 A1 (NIPPON STEEL & SUMIKIN STAINLESS STEEL CORP) 12 September 2014 (2014-09-12) <br> paragraphs [0016]-[0040], [0051], table 1 | 10 |
| A | | 6-9 |
| A | JP 2020-158842 A (NIPPON STEEL STAINLESS STEEL CORP) 01 October 2020 (2020-10-01) | 1-12 |
| A | JP 2019-119913 A (SANYO SPECIAL STEEL CO., LTD.) 22 July 2019 (2019-07-22) | 1-12 |
| A | JP 2017-150016 A (NIPPON STEEL & SUMIKIN STAINLESS STEEL CORP) 31 August 2017 (2017-08-31) | 1-12 |

☐ Further documents are listed in the continuation of Box C.  ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **07 February 2023** | **21 February 2023** |

| Name and mailing address of the ISA/JP | Authorized officer |
|---|---|
| **Japan Patent Office (ISA/JP)** <br> **3-4-3 Kasumigaseki, Chiyoda-ku, Tokyo 100-8915** <br> **Japan** | |
| | Telephone No. |

Form PCT/ISA/210 (second sheet) (January 2015)

INTERNATIONAL SEARCH REPORT
Information on patent family members

International application No.

**PCT/JP2022/044457**

| Patent document cited in search report | | | Publication date (day/month/year) | Patent family member(s) | | | Publication date (day/month/year) |
|---|---|---|---|---|---|---|---|
| JP | 2012-117084 | A | 21 June 2012 | US paragraphs [0126]-[0195], [0251], table 1 | 2013/0004360 | A1 | |
| | | | | WO | 2011/111871 | A1 | |
| | | | | EP | 2546378 | A1 | |
| | | | | KR | 10-2012-0099152 | A | |
| | | | | CN | 102791897 | A | |
| WO | 2014/136866 | A1 | 12 September 2014 | US paragraphs [0028]-[0053], [0077], table 1 | 2015/0376733 | A1 | |
| | | | | EP | 2966187 | A1 | |
| | | | | CN | 104968818 | A | |
| | | | | KR | 10-2015-0103212 | A | |
| | | | | ES | 2678876 | T3 | |
| | | | | PL | 2966187 | T3 | |
| JP | 2020-158842 | A | 01 October 2020 | (Family: none) | | | |
| JP | 2019-119913 | A | 22 July 2019 | US | 2020/0391286 | A1 | |
| | | | | WO | 2019/139017 | A1 | |
| | | | | EP | 3738695 | A1 | |
| | | | | TW | 201930612 | A | |
| | | | | CN | 111491750 | A | |
| | | | | KR | 10-2020-0104288 | A | |
| | | | | CN | 114134427 | A | |
| JP | 2017-150016 | A | 31 August 2017 | (Family: none) | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2019139017 A
- WO 2019235014 A
- WO 2020110498 A
- WO 2021214958 A
- JP 6270563 B
- JP 6985940 B